## Europäisches Patentamt
## European Patent Office
## Office européen des brevets

(19)

(11) Veröffentlichungsnummer: **0 177 671**
**B1**

(12) **EUROPÄISCHE PATENTSCHRIFT**

(45) Veröffentlichungstag der Patentschrift:
29.06.88

(51) Int. Cl.⁴: **C 01 B 17/30**

(21) Anmeldenummer: **85106557.3**

(22) Anmeldetag: **29.05.85**

(54) **Verfahren zur Herstellung von Natriumpolysulfiden aus den Elementen Natrium und Schwefel.**

(30) Priorität: **06.10.84 DE 3436698**

(43) Veröffentlichungstag der Anmeldung:
**16.04.86 Patentblatt 86/16**

(45) Bekanntmachung des Hinweises auf die Patenterteilung:
**29.06.88 Patentblatt 88/26**

(84) Benannte Vertragsstaaten:
**AT BE CH DE FR GB IT LI LU NL SE**

(56) Entgegenhaltungen:
**DE-C-590 278**
**DE-C-663 710**

**SYNTHESIS AND REACTIVITY IN INORGANIC AND METAL ORGANIC CHEMISTRY, Band 14, Nr. 7, 1984, Seiten 945-951, New York, US; A.P. BROWN et al.: "The direct synthesis of sodium polysulfides from sodium and sulfur"**

(73) Patentinhaber: **Degussa Aktiengesellschaft, Weissfrauenstrasse 9, D-6000 Frankfurt am Main 1 (DE)**

(72) Erfinder: **Bittner, Friedrich, Dr., Mozartstrasse 18, D-6232 Bad Soden (DE)**
Erfinder: **Hinrichs, Walter, Dr., Alte Bohle 15, D-5040 Brühl (DE)**
Erfinder: **Hovestadt, Herbert, Dr., Kölner Ring 138, D-5042 Erftstadt (DE)**
Erfinder: **Lange, Ludwig, Dr., Mühlenbach 40, D-5040 Brühl (DE)**
Erfinder: **Splett, Erich, Im Bachholz 4, D-5030 Hürth- Berrenrath (DE)**

EP 0 177 671 B1

## Beschreibung

Die Erfindung betrifft ein Verfahren zur Herstellung von reinen Natriumpolysulfiden direkt aus den Elementen Natrium und Schwefel.

Aus Gmelin, Handbuch der anorganischen Chemie, 8. Auflage, Natrium, Seite 466 ff sowie den Ergänzungsbänden Lieferung 1, Seite 184 ff und Lieferung 3, Seite 1049 ff ist bekannt, daß Natriumsulfid und Natriumpolysulfide nach einer Vielzahl von Verfahren hergestellt werden können, z. B. durch Umsetzung von Natriumsalzen mit Schwefelverbindungen, wie einem Sulfid oder Schwefelwasserstoff, in wäßrigen oder alkoholischen Lösungen oder im Schmelzfluß mit elementarem Schwefel in Gegenwart von Kohlenstoff oder Carbiden sowie durch Reduktion von Natriumsulfat mit Wasserstoff oder anderen Gasen und Schwefelung des primär gebildeten Sulfids zum gewünschten Polysulfid.

Allen bekannten Verfahren ist gemeinsam, daß mehr oder weniger stark mit Reaktionspartnern verunreinigte Produkte erhalten werden, die z. B. durch Lösen in geeigneten Lösungsmitteln und Filtrieren von den Verunreinigungen getrennt werden müssen. In Lösung hergestellte Polysulfide sind ebenfalls mehr oder weniger stark durch Fremdsalze verunreinigt. Zur Herstellung von festen Wasserfreien Polysulfiden müssen diese Produkte dann aufwendigen Trocknungsmaßnahmen unterworfen werden, das gilt auch für das zwar reine, aber ebenfalls nur in Lösung nach dem sog. Amalgam-Verfahren anfallende Polysulfid.

Es ist bekannt, daß die Elemente Natrium und Schwefel äußerst heftig miteinander reagieren (Bildungsenthalpie für $Na_2S$: $\Delta HB = 389,1$ kJ/Mol, für das krist. $Na_2S_4$: $\Delta H^o_{298,16} = -412$ kJ/Mol), so daß eine Herstellung direkt aus den auf dem Markt in großer Reinheit erhältlichen Elementen bislang nicht zum technischen Einsatz gelangen konnte.

Man Versuchte vielmehr, das Natrium z. B. durch Lösen in flüssigem Ammoniak oder durch Mischen mit Kochsalz zu verdünnen oder unter siedendem Toluol abzudecken, um die Reaktion mit Schwefel zu dämpfen.

Aus SYNTHESIS AND REACTIVITY IN INORGANIC AND METAL ORGANIC CHEMISTRY, Band 14, Nr. 7, 1984, Seiten 945 bis 951, Hew York, US;

A.P. BROWN et al. "The direct synthesis of sodium Polysulfides from sodium and sulfur"

war auch schon ein Verfahren zur Herstellung von Natriumpolysulfiden durch Synthese aus den Elementen unter Schutzgas bekannt, bei dem Natrium als Schmelze vorgelegt und Schwefel in äquimolarer Menge Portionsweise unter Rühren zugegeben wird, so daß ein im wesentlichen aus $Na_2S_2$ bestehendes Reaktionsprodukt erhalten wird. Das Reaktionsprodukt wird nach Erkalten zerkleinert, bei Raumtemperatur mit der bezogen auf das Zielprodukt erforderlichen Menge Schwefels vermischt und die Mischung unter Bildung von Polysulfid geschmolzen. Schließlich wird noch nicht-umgesetztes Natrium, das aus dem zerkleinerten Reaktionsprodukt ausgelesen wurde, in die Polysulfidschmelze eingetragen.

Es wurde nunmehr ein Verfahren zur Herstellung von Natriumpolysulfiden, vorzugsweise Natriumtetrasulfid $Na_2S_4$ und Polysulfid der stöchiometrischen Zusammensetzung $Na_2S_3$, aus den Elementen Natrium und Schwefel in hochreiner, absolut wasser- und lösungsmittelfreier Form gefunden, wobei man das Natrium und den Schwefel unter Schutzgas in einem dem gewünschten Polysulfid entsprechenden stöchiometrischen Verhältnis abwechselnd und intermittierend in eine vorgelegte Schmelze eines Polysulfids unter kräftigem Rühren in derart bemessenen Portionen eindosiert, daß beim Natriumeintrag selbst bei Bildung solcher niederer Polysulfid-Zwischenprodukte, die in der schmelzflüssigen Vorlage in heterogener Phase vorliegen, die Reaktionsmischung im Zustand einer rührfähigen Suspension verbleibt und daß man beim Eintrag des Schwefels diesen jeweils vollständig zu einem Polysulfid des gewünschten oder eines höheren Schwefelgehaltes abreagieren läßt.

Welches Polysulfid bei diesem Verfahren gebildet wird, hängt also von der jeweiligen Einstellung des stöchiometrischen Verhältnisses bei der intermittierenden Chargierung der Reaktionspartner ab. Die äußerst heftige Reaktion der reinen Elemente miteinander wird gemäß der Erfindung entschärft, indem z. B. bei einer Darstellung von Natriumtetrasulfid das Natrium nicht direkt mit dem elementaren Schwefel in Kontakt gebracht wird, sondern in kleinen Teilmengen und in dünnem Strahl in eine kräftig gerührte, ca. 300° C heiße Tetrasulfid-Schmelze (Smp. $Na_2S_4 = 285°$ C) eingetragen wird, wobei intermediär niedere Polysulfide, z. B. der stöchiometrischen Zusammensetzung bzw. Summenformel $Na_2S_3$ oder $Na_2S_2$ und andere Polysulfide mit jeweils höheren Schmelzpunkten gebildet werden, die durch Nachchargierung der erforderlichen Teilmengen an Schwefel wieder in das gewünschte Polysulfid, also $Na_2S_4$, rücküberführt werden. Bei einer Darstellung des Polysulfids in der stöchiometrischen Zusammensetzung $Na_2S_3$ oder $Na_2S_2$ wird entsprechend verfahren.

Gegenüber dem eingangs abgehandelten bekannten Verfahren von A.P. BROWN et al. wird also mit der abwechselnden und intermittierenden Chargierung der Reaktionspartner in ein Medium aus Polysulfid ein anderer Weg beschritten. Dabei wird vermieden, daß Natrium und Schwefel miteinander in Berührung kommen und der Schwefel wird jeweils in eine Polysulfidschmelze eingetragen und zu einem Polysulfid des gewünschten oder eines höheren Schwefelgehaltes abreagiert.

Für den chargenweisen Betrieb des erfindungsgemäßen Verfahrens hat es sich als sinnvoll erwiesen, den Reaktor bei der Fertigproduktentnahme stets zu etwa einem Drittel bis zur Hälfte gefüllt zu belassen, damit die exotherme Reaktion bei der Natriumzugabe durch eine relativ große Menge Polysulfidschmelze als Wärmepuffer aufgefangen und die Wärme über die Reaktorwand effizienter abgeführt werden kann.

In dem erfindungsgemäßen Verfahren können das Natrium und der Schwefel in schmelzflüssiger oder fester, feinverteilter oder in anderer großoberflächiger Form zudosiert werden. Festes Natrium kann man auch als Preßdraht zudosieren.

Nach einer günstigen und bevorzugten Ausführungsform des Verfahrens hält man die Temperatur der vorgelegten Schmelze über die Geschwindigkeit des Natriumeintrags und/oder durch Wärmeabfuhr oberhalb des Schmelzpunktes der infrage kommenden Polysulfide, d. h. im Bereich von 200 - 600°C.

Die Temperatur der Schmelze beträgt bei der Herstellung von $Na_2S_3$ oder $Na_2S_4$ vorzugsweise 340 - 360°C.

Angesichts der aggressiven Polysulfidschmelze und der hohen Reaktionstemperaturen muß für die Umsetzungsapparatur ein geeigneter Werkstoff gewählt werden. Es konnte festgestellt werden, daß man die Reaktion am besten in einem Reaktor durchführt, dessen mit der Polysulfidschmelze in Berührung kommende Teile aus Aluminium/Magnesium-Legierungen, insbesondere AlMg3, Glaskohlenstoff oder anderen gegen Polysulfidschmelzen resistenten Werkstoffen bestehen oder mit diesen Werkstoffen ummantelt bzw. ausgekleidet sind.

Als Schutzgas kann man Inertgas, vorzugsweise Argon einsetzen.

Im erfindungsgemäßen Verfahren gegebenenfalls verdampfende Schwefelmengen können durch Kondensation verflüssigt und in den Reaktor zurückgeleitet werden, was einen wirtschaftlichen Betrieb sicherstellt.

Die Erfindung wird nachfolgend anhand der Beschreibung einer konkreten Ausführungsform von Verfahrensweise und Apparatur, welche gleichermaßen für die Bereitung von $Na_2S_4$ und eines Polysulfids der stöchiometrischen Zusammensetzung $Na_2S_3$ geeignet ist sowie durch Ausführungsbeispiele zu der damit durchgeführten Bereitung der beiden Verbindungen näher erläutert.

Ein Laborreaktor aus V2A mit kräftiger ebener Bodenplatte war mit der gegenüber dem Reaktionsmedium resistenten Legierung AlMg3 ausgekleidet. Der aufgeflanschte Deckel aus AlMg3 war mit einem eingeschraubten Stutzen zum alternativen Einfüllen von Natrium und Schwefelblüte, einem unter dem Deckel endenden Einleitungsrohr für das Schutzgas Argon, einem Temperaturfühler und je einer Stopfbuchse zur Durchführung der AlMg3-ummantelten Welle eines Flügelrührers sowie eines in der Höhe verstellbaren, am Ende durch einen Stopfen aus Teflon verschließbaren Entleerungsrohres versehen. Sämtliche mit der Schmelze in Berührung kommenden Reaktorteile bestanden somit aus der genannten resistenten Legierung. Bei einer lichten Weite von 15 und einer Höhe von 30 cm konnte der Reaktor maximal 4 l - entsprechend ca. 7,5 kg - Schmelze aufnehmen.

Vor Beginn der chargenweisen Produktion war der auf einer stufenlos heizbaren elektrischen Platte stehende, am Mantel wärmeisolierte Reaktor noch mit etwa 3 kg ca. 300°C heißer Schmelze als Rest der vorherigen Charge gefüllt. Der geschlossene Reaktor stand dabei unter einem Argondruck von ca. 50 Pa. Vor dem Öffnen des Einfüllstutzens wurde der Argonstrom zur Verhinderung des Eindringens von Luft leicht verstärkt und das auf ca. 110°C erhitzte flüssige Natrium in kleinen Portionen von ca. 3 g mit einer Glaspipette eingespritzt. Nach erfolgter Zugabe von ca. 30 g Natrium wurden über einen aufgesetzten Trichter die abgewogene, zur Bildung des gewünschten Polysulfids äquivalente Menge Schwefel zugesetzt und erneut 30 g Natrium zuchargiert usw. Mit zunehmendem Reaktorinhalt konnten die abwechselnd zugefügten Natrium- und Schwefelmengen verdoppelt, gegen Ende sogar verdreifacht werden.

Während des Befüllens betrug die Rührgeschwindigkeit 200 Umdrehungen/min., sie konnte in den darauf folgenden etwa 2 Stunden zum Lösen des intermediär entstandenen Grießes von niederen Polysulfiden auf 100 Umdrehungen/min. herabgesetzt werden. Der geschlossene Reaktor wurde während dieser Zeit wieder unter einen Argondruck von ca. 50 Pa gesetzt.

Durch Drosseln bzw. Abstellen der Heizung während der Zudosierung von Natrium und Schwefel wurde sichergestellt, daß die Reaktortemperatur trotz der exothermen Reaktion nie über 350°C stieg. Nach den genannten 2 Stunden "Nachreaktion" wurde durch Einführen einer AlMg3-Pipette in die homogene Schmelze Probematerial zur Analyse entnommen; es zeigte sich, daß nur in seltenen Fällen eine Nachchargierung von Natrium oder Schwefel notwendig war.

Zur Entnahme des Reaktionsprodukts wurde das Entnahmerohr des Reaktors durch die Stopfbuchse bis auf eine Höhe von ca. 8 cm über Boden abgesenkt, sein über dem Reaktordeckel freiabfallender Schenkel durch ein elektrisches Heizband auf ca. 300°C erwärmt und der Reaktor nach Öffnen des Rohres durch Erhöhung des Innendrucks über die Argonleitung bis auf eine Restmenge von ca. 3 kg teilentleert. Die ausfließende Schmelze wurde in einer abgedeckten flachen kalten Wanne von 50 x 60 cm Bodenfläche unter Argonatmosphäre aufgefangen und erstarren lassen.

**Beispiel 1**

Herstellung von Natriumtetrasulfid $Na_2S_4$

| | |
|---|---|
| Vorlage (Rest aus Vorcharge) | = 2,970 kg $Na_2S_4$ |
| Natrium-Zugabe | = 1,176 kg Na |
| Schwefel-Zugabe | = 3,281 kg S |
| Produktion | = 4,457 kg $Na_2S_4$ Produktentnahme |

= 4,565 kg $Na_2S_4$ *)  Rest (Vorlage für nächste Charge)
= 2,862 kg $Na_2S_4$

*) Analyse:  26,25% Na (theoretisch 26,39 % Na)
73,67 % S ges. (theoretisch 73,61 % S ges.)


**Beispiel 2**


Herstellung von Natriumpolysulfid der stöchiometrischen Zusammensetzung $Na_2S_3$

Vorlage (Rest aus Vorcharge)  = 3,105 kg $Na_2S_3$

Natrium-Zugabe  = 1,399 kg Na
Schwefel-Zugabe  = 2,926 kg S

Produktion  = 4,325 kg $Na_2S_3$
Produktentnahme  = 4,483 kg $Na_2S_3$ *)
Rest (Vorlage für nächste Charge)  = 2,947 kg $Na_2S_3$


*) Analyse:  32,20 % Na (theoretisch 32,34 % Na)
67,67 % S ges. (theoretisch 67,66 % S ges.)


**Patentansprüche**

1. Verfahren zur Herstellung von Natriumpolysulfiden aus den Elementen Natrium und Schwefel, wobei man das Natrium und den Schwefel unter Schutzgas in einem dem gewünschten Polysulfid entsprechenden stöchiometrischen Verhältnis abwechselnd und intermittierend in eine vorgelegte Schmelze eines Polysulfids unter kräftigem Rühren in derart bemessenen Portionen eindosiert, daß beim Natriumeintrag selbst bei Bildung solcher niederer Polysulfid-Zwischenprodukte, die in der schmelzflüssigen Vorlage in heterogenen Phase vorliegen, die Reaktionsmischung im Zustand einer rührfähigen Suspension verbleibt und daß man beim Eintrag des Schwefels diesen jeweils vollständig zu einem Polysulfid des gewünschten oder eines höheren Schwefelgehaltes abreagieren läßt.

2. Verfahren nach Anspruch 1, <u>dadurch gekennzeichnet</u>, daß man das Natrium und den Schwefel in Schmelzflüssiger oder fester Form zudosiert.

3. Verfahren nach Anspruch 1 oder 2, <u>dadurch gekennzeichnet</u>, daß man die Temperatur der vorgelegten Schmelze über die Geschwindigkeit des Natriumeintrags und/oder durch Värmeabfuhr im Bereich von 200 - 600° C hält.

4. Verfahren nach den Ansprüchen 1 bis 3, <u>dadurch gekennzeichnet</u>, daß bei der HerStellung von $Na_2S_3$ oder $Na_2S_4$ die Temperatur der Schmelze 340 - 360° C beträgt.

5. Verfahren nach den Ansprüchen 1 bis 4, <u>dadurch gekennzeichnet</u>, daß man die Reaktion in einem Reaktor durchführt, dessen mit der Polysulfidschmelze in Berührung kommende Teile aus Aluminium/Magnesium-Legierungen, insbesondere AlMg3, Glaskohlenstoff oder anderen gegen Polysulfidschmelzen resistenten Werkstoffen bestehen oder mit diesen Werkstoffen ummantelt bzw. ausgekleidet sind.

6. Verfahren nach den Ansprüchen 1 bis 5, <u>dadurch gekennzeichnet</u>, daß man als Schutzgas ein Inertgas, Vorzugsweise Argon, einsetzt,

7. Verfahren nach den Ansprüchen 1 bis 6, <u>dadurch gekennzeichnet</u>, daß gegebenenfalls verdampfter Schwefel durch Kondensation verflüssigt und in den Reaktor zurückgeleitet wird.


**Claims**

1. A process for the production of sodium polysulfides from the elements sodium and sulfur in which the sodium and the sulfur are alternately and intermittently introduced with vigorous stirring in an inert gas atmosphere in a stoichiometric ratio corresponding to the desired polysulfide into a melt of a polysulfide in portions measured in such a way that, on introduction of the sodium, the reaction mixture remains in the form of a stirrable suspension, even where lower polysulfide intermediates present in heterogeneous phase in the liquid melt are formed, and, on introduction of the sulfur, the sulfur is left to react off completely to form a polysulfide of the desired sulfur content or a higher sulfur content.

2. A process as claimed in claim 1, characterized in that the sodium and the sulfur are introduced in molten or solid form.

3. A process as claimed in claim 1 or 2, characterized in that the temperature of the polysulfide melt is kept at 200 to 600°C through the rate at which the sodium is introduced and/or through the dissipation of heat.

4. A process as claimed in claims 1 to 3, characterized in that, in the production of $Na_2S_3$ or $Na_2S_4$ the temperature of the melt is 340 to 360°C.

5. A process as claimed in claims 1 to 4, characterized in that the reaction is carried out in a reactor of which those parts which come into contact with the polysulfide melt consist of aluminium/magnesium alloys, particularly AlMg3, glassy carbon or other materials resistant to polysulfide melts or are coated or lined with such materials.

6. A process as claimed in claims 1 to 5, characterized in that argon is preferably used as the inert gas.

7. A process as claimed in claims 1 to 6, characterized in that optionally evaporated sulfur is liquefied by condensation and returned to the reactor.

**Revendications**

1. Procédé pour la préparation de polysulfures de sodium à partir des éléments sodium et soufre, dans lequel on introduit de façon réglée, alternativement et par intermittence le sodium et le soufre sous un gaz protecteur, en une proportion stoechiométrique correspondant au polysulfure désiré, dans une masse fondue d'un polysulfure introduite au préalable, sous vigoureuse agitation, par portions mesurées de façon telle que, lors de l'introduction du sodium, par la seule formation des produits intermédiaires de type polysulfure inférieur, qui se trouvent en phase hétérogène dans la masse fondue introduite au préalable, le mélange réactionnel se maintient à l'état d'une suspension pouvant être agitée et que, lors de l'introduction du soufre, on peut chaque fois le faire réagir complètement pour aboutir à un polysulfure ayant la teneur en soufre désirée ou une teneur en soufre plus élevée.

2. Procédé selon la revendication 1, caractérisé en ce que l'on introduit de façon réglée le sodium et le soufre à l'état fondu ou sous forme solide.

3. Procédé selon l'une quelconque des revendications 1 à 2, caractérisé en ce que l'on maintient la température de la masse fondue, introduire au préalable, dans un intervalle de 200 à 600°C, en réglant la vitesse de l'introduction du sodium et/ou par élimination de chaleur.

4. Procédé selon l'une quelconque des revendications 1 à 3, caractérisé en ce que, lors de la préparation de $Na_2S_3$ ou de $Na_2S_4$ la température de la masse fondue s'élève à 340-360°C.

5. Procédé selon l'une quelconque des revendications 1 à 4, caractérisé en ce que l'on effectue la réaction dans un réacteur dont les parties entrant en contact avec la masse fondue de polysulfure sont constituées d'alliages d'aluminium et magnésium, en particulier $AlMg_3$, de carbone vitreux ou d'autres matériaux résistant aux polysulfures fondus, ou revêtues ou entourées de ces matériaux.

6. Procédé selon l'une quelconque des revendications 1 à 5, caractérisé en ce que l'on utilise, en tant que gaz protecteur, un gaz inerte, l'argon de préférence.

7. Procédé selon l'une quelconque des revendications 1 à 6, caractérisé en ce que le soufre éventuellement évaporé est liquéfié par condensation et réintroduit dans le réacteur.